# EUROPÄISCHE PATENTSCHRIFT

(11) **EP 0 540 520 B1**
(45) Veröffentlichungstag und Bekanntmachung des Hinweises auf die Patenterteilung: **27.11.1996**
(21) Anmeldenummer: 91900769.0
(22) Anmeldetag: 17.12.1990
(51) Int. Cl.: H01C 10/34, G01B 7/30, G01D 5/16

(54) **DREHWINKEL-POTENTIOMETER**
ANGLE OF ROTATION POTENTIOMETER
POTENTIOMETRE POUR ANGLES DE ROTATION

(30) Priorität: 18.12.1989 DE 3941716
(43) Veröffentlichungstag der Anmeldung: 12.05.1993
(73) Patentinhaber: ZAHNRADFABRIK FRIEDRICHSHAFEN AG, D-88015 Friedrichshafen (DE)
(72) Erfinder: LANG, Armin, D-7070 Schwäbisch Gmünd (DE)
(86) Internationale Anmeldenummer: EP9002202
(87) Internationale Veröffentlichungsnummer: WO9109408

(56) Entgegenhaltungen:
- WO-A-89/00331
- DE-A- 3 640 110
- US-A- 4 359 711

## Beschreibung

Die Erfindung betrifft eine Kombination eines Potentiometers und einer Welle für die Messung von Drehwinkeln der Welle gegenüber einem feststehenden Gehäuse nach den Oberbegriffen der Ansprüche 1 und 2.

Ein derartiges Drehwinkel-Potentiometer ist bekannt aus der DE 38 22 314 Al. Bei diesem Potentiometer ist auf einer feststehenden Scheibe wenigstens eine kreisringförmige Widerstandsbahn angeordnet. Auf einer zusammen mit der Welle umlaufenden Scheibe sind zwei kreisringförmige Kollektorbahnen konzentrisch zueinander angeordnet. Die Widerstandsbahn ist an zwei zueinander versetzten Widerstands-Abgriffsstellen mit zwei Anschlußkontakten verbunden. Jeder der Kollektorbahnen ist ein Stromabnehmer-Schleifer zugeordnet, der mit einem Anschlußkontakt verbunden ist.

Bei derartigen Potentiometern besteht allgemein das Problem, die Signale der beiden Kollektorbahnen an die Anschlußkontakte weiterzuleiten. Bei dem bekannten Potentiometer wird dieses Problem dadurch gelöst, daß auf die umlaufende Scheibe zunächst die radial äußere Kollektorbahn als geschlossener Kreisring aufgetragen wird, der einen radial nach innen gerichteten Fortsatz aufweist. Als nächster Schritt wird eine Isolierschicht auf die umlaufende Scheibe aufgetragen, die die Kollektorbahn teilweise überdeckt und oberflächlich von dem Fortsatz trennt. Erst danach wird die innere Kollektorbahn auf die Isolierschicht derart aufgebracht, daß die innere Kollektorbahn von der äußeren Kollektorbahn und von dem radial nach innen gerichteten Fortsatz der äußeren Kollektorbahn isoliert ist.

Der Erfindung liegt die Aufgabe zugrunde, den Herstellungsgang der Kollektorbahnen und damit die Herstellung des gesamten Potentiometers zu vereinfachen und eine kostengünstige und raumsparende Montage in einem Gehäuse zu ermöglichen.

Diese Aufgabe wird durch das in den Ansprüchen 1 bzw. 2 gekennzeichnete Potentiometer gelöst. Vorteilhafte und zweckmäßige Ausgestaltungen der Erfindung sind in den Unteransprüchen angegeben. Die Erfindung ist jedoch nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Gemäß Anspruch 1 wird das bekannte Potentiometer dadurch verbessert, daß die außen liegende Kollektorbahn in einem radial außerhalb der Widerstandsbahn liegenden Bereich und die innen liegende Kollektorbahn in einem radial innerhalb der Widerstandsbahn liegenden Bereich auf der umlaufenden Scheibe angeordnet sind und daß die Anschlußkontakte als Steckbuchsen ausgebildet sind, die in der feststehenden Scheibe integriert sind.

Auf diese Weise ist es möglich, die beiden Kollektorbahnen auf der umlaufenden Scheibe gleichzeitig aufzubringen. Zwei Stromabnehmer-Schleifer, die in federndem Kontakt zu der Widerstandsbahn stehen, können auf einfache Weise direkt mit der inneren bzw. äußeren Kollektorbahn verbunden werden, ohne daß dabei die jeweils andere Kollektorbahn isoliert unterfahren oder überbrückt werden müßte. Außerdem kann das Potentiometer sehr leicht montiert werden. Es wird beispielsweise in eine zylindrische Bohrung eines Gehäuses eingeschoben. Ein Anschlußstecker wird dann durch eine Öffnung des Gehäuses direkt in das Potentiometer gesteckt.

Bei einer Variante gemäß Anspruch 2 sind sowohl die Kollektorbahnen als auch die Widerstandsbahn auf der feststehenden Scheibe angeordnet. Alle Bahnen können dadurch in einem Arbeitsgang hergestellt werden. Diese Variante zeigt, daß die als Steckbuchsen ausgebildeten Anschlußkontakte bei unterschiedlichen Potentiometern angewendet werden können.

Die Steckbuchsen können gemäß den Unteransprüchen auf besonders einfache Weise mit der feststehenden Scheibe durch Befestigungsklammern verbunden werden. Dabei können die Befestigungsklammern außer der Befestigungsfunktion auch die Funktion von Kontaktstellen erfüllen, indem sie direkt mit der Widerstandsbahn bzw. mit den Kollektorbahnen verbunden sind. Wenigstens eine Steckbuchse wird dazu verwendet, die Widerstandsbahn zu untertunneln, ohne daß dabei eine gesonderte Isolierung nötig wäre.

Durch die Integration der Steckbuchsen in der feststehenden Scheibe werden vorstehende Anschlußkontakte vermieden, so daß das Potentiometer in einfacher Weise beispielsweise in eine zylindrische, koaxial zu der Welle in dem Gehäuse angeordnete Bohrung eingeschoben werden kann. Wird in dem Gehäuse in dem Bereich der Steckbuchsen eine Anschlußöffnung vorgesehen, so kann durch diese Anschlußöffnung ein Anschlußstecker seitlich in die Steckbuchsen eingesteckt werden. Um die axiale Länge des Potentiometers zu begrenzen, ist es zweckmäßig, die Steckbuchsen parallel in einer Reihe nebeneinander senkrecht zur Achse der Welle in der feststehenden Scheibe anzuordnen mit an der Außenumfangsfläche der Scheibe liegenden Öffnungen. Der Anschlußstecker wird in diesem Fall als Flachstecker ausgebildet mit parallel in einer Reihe nebeneinander angeordneten Anschlußstiften.

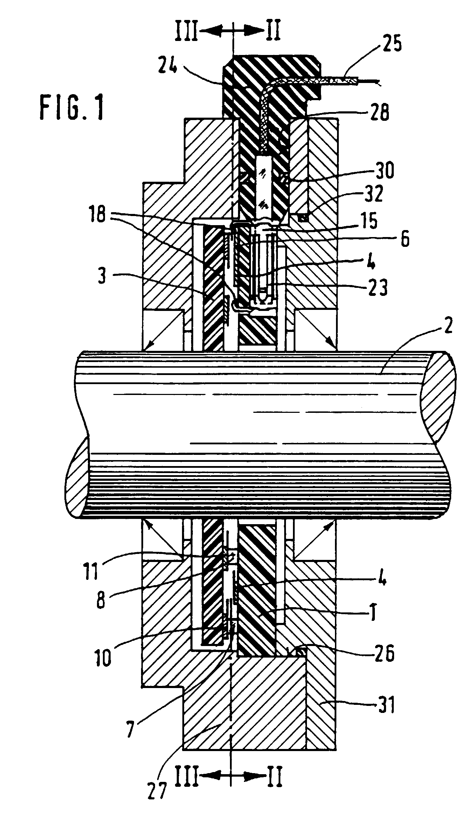

Die Erfindung wird im folgenden anhand zweier in der Zeichnung dargestellter Ausführungsbeispiele näher erläutert. Sie zeigen
- Fig. 1: das in einem Gehäuse eingesetzte Potentiometer;
- Fig. 2: die Draufsicht auf die feststehende Scheibe des Potentiometers gemäß der Linie II-II in Fig. 1;
- Fig. 3: die Draufsicht auf die umlaufende Scheibe des Potentiometers gemäß der Linie III-III in Fig. 1;
- Fig. 4: die Draufsicht auf die feststehende Scheibe des Potentiometers gemäß dem zweiten Ausführungsbeispiel;
- Fig. 5: die Draufsicht auf die umlaufende Scheibe des Potentiometers gemäß dem zweiten Ausführungsbeispiel.

Die Grundelemente des erfindungsgemäßen Potentiometers sind gebildet durch eine feststehende Scheibe 1 und eine zusammen mit einer Welle 2 umlaufende Scheibe 3. Auf der feststehenden Scheibe 1 ist ein kreisringförmige Widerstandsbahn 4 aufgebracht. Die Widerstandsbahn 4 weist zwei zueinander um 180° versetzte Widerstands-Abgriffsstellen 5 und 6 auf.

An der feststehenden Scheibe 1 sind zwei Stromabnehmer-Schleifer 7 und 8 befestigt, die in Kontakt stehen mit zwei konzentrisch zueinander auf der umlaufenden Scheibe 3 angeordneten, kreisringförmigen Kollektorbahnen 10 und 11. Die außen liegende Kollektorbahn 10 ist in einem radial außerhalb der Widerstandsbahn 4 liegenden Bereich und die innen liegende Kollektorbahn 11 in einem radial innerhalb der Widerstandsbahn 4 liegenden Bereich angeordnet. Auf diese Weise ist zwischen den beiden Kollektorbahnen 10 und 11 ausreichend Platz für zwei um beispielsweise 90° zueinander versetzt angeordnete Stromabnehmer-Schleifer 12 und 13. Der Stromabnehmer-Schleifer 12 ist mit der außen liegenden Kollektorbahn 10 verbunden, der Stromabnehmer-Schleifer 13 mit der innen liegenden Kollektorbahn 11. Die beiden Stromabnehmer-Schleifer 12 und 13 stehen in federndem Kontakt mit der Widerstandsbahn 4.

In der feststehenden Scheibe 1 sind vier Steckverbindungen in der Form von Steckbuchsen 14 bis 17 parallel zueinander in einer Reihe nebeneinander im wesentlichen senkrecht zu der Achse der Welle 2 angeordnet. Die Steckbuchsen 14 bis 17 sind durch Befestigungsklammern 18 mit der feststehenden Scheibe 1 verbunden. Die Widerstands-Abgriffsstelle 5 der Widerstandsbahn 4 ist über eine Leiterbahn 20 mit der Steckbuchse 14 verbunden. Dabei ist die radial äußere Befestigungsklammer 18 der Steckbuchse 14 derart ausgebildet, daß sie direkt mit der Leiterbahn 20 verbunden ist und damit die Kontaktstelle bildet zwischen der Leiterbahn 20 und der Steckbuchse 14. Die Widerstands-Abgriffsstelle 6 der Leiterbahn 4 ist genau im Bereich der Steckbuchse 15 angeordnet, so daß die Widerstands-Abgriffsstelle 6 über die radial äußere Befestigungsklammer 18 der Steckbuchse 15 in direktem Kontakt mit der Steckbuchse 15 steht.

Der Stromabnehmer-Schleifer 7 für die äußere Kollektorbahn 10 steht über eine Leiterbahn 21 und die entsprechende Befestigungsklammer 18 in Kontakt mit der Steckbuchse 16. In gleicher Weise steht der Stromabnehmer-Schleifer 8 über eine Leiterbahn 22 in Kontakt mit der Steckbuchse 17. Dabei ist jedoch zu beachten, daß die Leiterbahn 22 mit der radial inneren Befestigungsklammer 18 der Steckbuchse 17 in Kontakt steht. Die Widerstandsbahn 4 ist durch das nicht leitende Material der feststehenden Scheibe 1 von den Steckbuchsen 14 bis 17 isoliert. Dies ist insbesondere für die Steckbuchse 17 wichtig, weil durch diese Steckbuchse 17 eine Untertunnelung der Widerstandsbahn 4 erfolgt, durch die der Stromabnehmer-Schleifer 8 eine Verbindung an die Außenumfangsfläche der feststehenden Scheibe 1 erhält.

Die Steckbuchsen 14 bis 17 weisen Öffnungen auf, die an der Außenumfangsfläche der feststehenden Scheibe 1 liegen. Dabei kann die Außenumfangsfläche der feststehenden Scheibe 1 im Bereich der Öffnungen abgeflacht sein. Die Öffnungen der Steckbuchsen 14 bis 17 dienen zur Aufnahme von Anschlußstiften 23 eines Anschlußsteckers 24. Von dem Anschlußstecker 24 führen Signalleitungen 25 zu einer nicht dargestellten Stromquelle bzw. zu einer nicht dargestellten elektronischen Steuereinheit.

Mit gleicher Wirkung ist eine Umkehrung in den Steckverbindungen möglich. In diesem Fall sind in der feststehenden Scheibe 1 die Anschlußstifte und in dem Anschlußstecker 24 die Steckbuchsen vorgesehen.

Durch die Integration der Anschlußkontakte in Form der Steckbuchsen 14 bis 17 erhält die feststehende Scheibe eine kompakte zylindrische Form ohne vorstehende Teile. Dadurch kann das Potentiometer sehr einfach montiert werden, indem es als Ganzes in eine zylindrische Bohrung 26 eines Gehäuses 27 eingesteckt wird. Der Anschlußstecker 24 wird dann durch eine im Bereich der Steckbuchsen 14 bis 17 in dem Gehäuse 27 liegende Anschlußöffnung 28 eingesteckt. Der Anschlußstecker 24 ist in der Anschlußöffnung 28 durch eine Dichtung 30 abgedichtet. Die Bohrung 26 wird durch einen Gehäusedeckel 31 mit einer Dichtung 32 in einfacher Weise dichtend geschlossen.

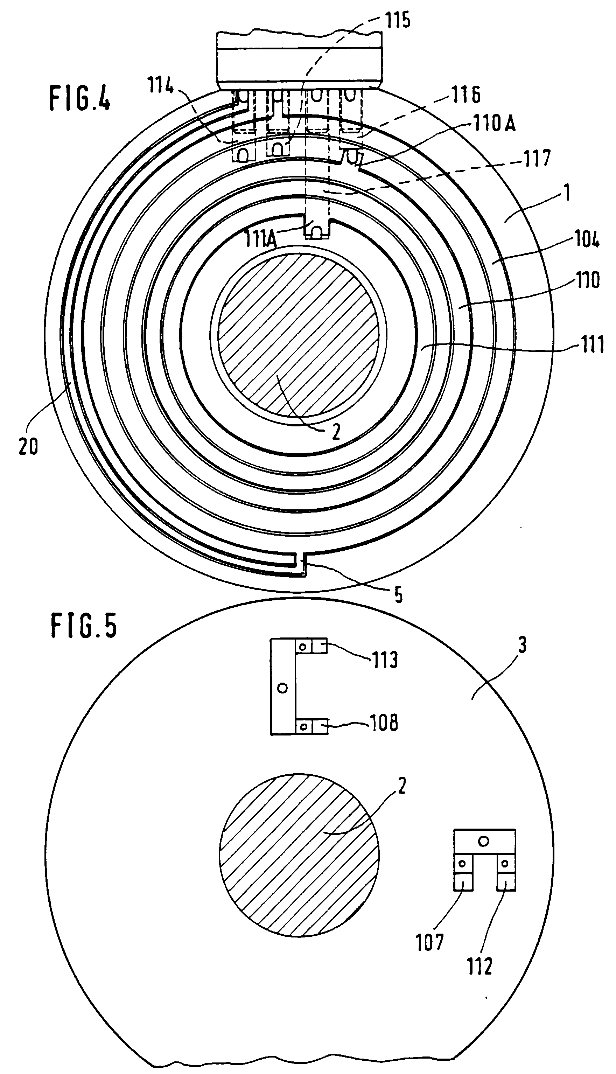

Bei einem zweiten Ausführungsbeispiel des Potentiometers, das in den Fig. 4 und 5 dargestellt ist, sind auf der feststehenden Scheibe 1 außer der Widerstandsbahn 104 auch die beiden Kollektorbahnen 110 und 111 angeordnet. Die Kollektorbahnen 110 und 111 befinden sich in einem Bereich, der radial innerhalb der Widerstandsbahn 104 liegt. Mit gleicher Wirkung kann die Widerstandsbahn auch radial innerhalb der oder zwischen den beiden Kollektorbahnen liegen.

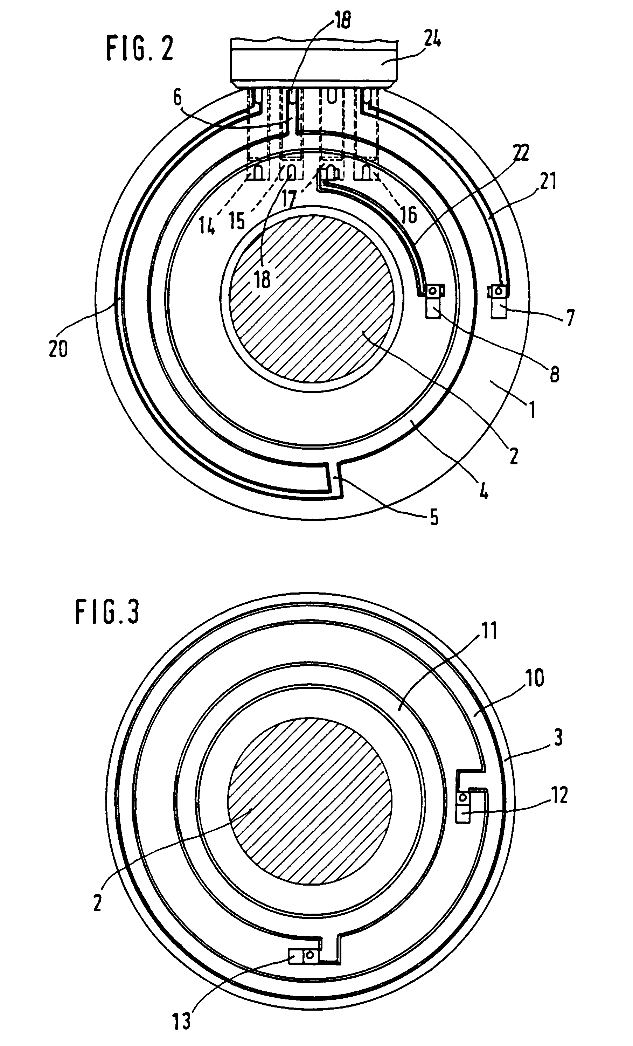

Die Widerstandsbahn 104 weist gleiche Widerstands-Abgriffsstellen mit Steckbuchsen 114 und 115 auf wie die Widerstandsbahn 4 des ersten Ausführungsbeispieles (Fig. 2). Die Kollektorbahnen 110 und 111 sind über radiale Fortsätze 110A und 111A direkt an die Steckbuchsen 116 bzw. 117 angeschlossen. Dabei erfolgt - ähnlich wie bei der Steckbuchse 17 des ersten Ausführungsbeispieles - durch die Steckbuchse 117 eine Untertunnelung der Widerstandsbahn 104 und der Kollektorbahn 110 und durch die Steckbuchse 116 eine Untertunnelung der Widerstandsbahn 104.

Der Abgriff von der Widerstandsbahn 104 zu den beiden Kollektorbahnen 110 und 111 erfolgt über Stromabnehmer-Schleifer 112 und 113, von denen jeder mit einem Stromabnehmer-Schleifer 107 bzw. 108 verbunden ist. Die Stromabnehmer-Schleifer 112 und 113 sind um beispielsweise 90° zueinander versetzt angeordnet und stehen in federndem Kontakt mit der Widerstandsbahn 104. Die Stromabnehmer-Schleifer 107 und 108 stehen in federndem Kontakt mit je einer der beiden Kollektorbahnen 110 bzw. 111.

### Bezugszeichen

- 1: feststehende Scheibe
- 2: Welle
- 3: umlaufende Scheibe
- 4, 104: Widerstandsbahn
- 5: Widerstands-Abgriffsstelle
- 6: Widerstands-Abgriffsstelle
- 7, 107: Stromabnehmer-Schleifer
- 8, 108: Stromabnehmer-Schleifer
- 9: -
- 10, 110: Kollektorbahn
- 110A: Fortsatz
- 11, 111: Kollektorbahn
- 111A: Fortsatz
- 12, 112: Stromabnehmer-Schleifer
- 13, 113: Stromabnehmer-Schleifer
- 14, 114: Steckbuchse
- 15, 115: Steckbuchse
- 16, 116: Steckbuchse
- 17, 117: Steckbuchse
- 18: Befestigungsklammer
- 19: -
- 20: Leiterbahn
- 21: Leiterbahn
- 22: Leiterbahn
- 23: Anschlußstift
- 24: Anschlußstecker
- 25: Signalleitung
- 26: zylindrische Bohrung
- 27: Gehäuse
- 28: Anschlußöffnung
- 29: -
- 30: Dichtung
- 31: Gehäusedeckel
- 32: Dichtung

## Patentansprüche

1. Kombination eines Potentiometers und einer Welle (2) für die Messung von Drehwinkeln der Welle (2) gegenüber einem feststehenden Gehäuse (27), mit folgenden Merkmalen:
- auf einer feststehenden Scheibe (1) ist wenigstens eine kreisringförmige Widerstandsbahn (4) angeordnet;
- auf einer zusammen mit der Welle (2) umlaufenden Scheibe (3) sind zwei kreisringförmige Kollektorbahnen (10, 11) konzentrisch zueinander angeordnet;
- die Widerstandsbahn (4) ist an zwei zueinander um 180° versetzten Widerstands-Abgriffsstellen (5, 6) mit zwei Anschlußkontakten verbunden;
- jeder der Kollektorbahnen (10, 11) ist ein Stromabnehmer-Schleifer (7, 8) zugeordnet, der mit einem Anschlußkontakt verbunden ist,
dadurch **gekennzeichnet**,
- daß die außenliegende Kollektorbahn (10) in einem radial außerhalb der Widerstandsbahn (4) liegenden Bereich und die innenliegende Kollektorbahn (11) in einem radial innerhalb der Widerstandsbahn (4) liegenden Bereich angeordnet ist;
- daß je ein Stromabnehmer-Schleifer (12 bzw. 13) mit einer der Kollektorbahnen (10, 11) verbunden ist und in federndem Kontakt mit der Widerstandsbahn (4) steht;
- daß die Anschlußkontakte als Steckverbindungen (Steckbuchsen 14 bis 17) ausgebildet sind und
- daß die Steckverbindungen (Steckbuchsen 14 bis 17) in der feststehenden Scheibe (1) integriert sind.

2. Kombination eines Potentiometers und einer Welle (2) für die Messung von Drehwinkeln der Welle (2) gegenüber einem feststehenden Gehäuse (27), mit folgenden Merkmalen:
- auf einer feststehenden Scheibe (1) ist wenigstens eine kreisringförmige Widerstandsbahn (104) angeordnet;
- eine Scheibe (3) läuft zusammen mit der Welle (2) um,
- zwei kreisringförmige Kollektorbahnen (110, 111) sind konzentrisch zueinander angeordnet,
- die Widerstandsbahn (104) ist an zwei zueinander um 180° versetzten Widerstands-Abgriffsstellen (5, 6) mit zwei Anschlußkontakten verbunden,
- jeder der Kollektorbahnen (110, 111) ist ein Stromabnehmer-Schleifer (107, 108) zugeordnet,
dadurch **gekennzeichnet**,
- daß die beiden Kollektorbahnen (110, 111) auf der feststehenden Scheibe (1) konzentrisch zu der Widerstandsbahn (104) angeordnet sind, in einem Bereich, der radial innerhalb und/oder außerhalb der Widerstandsbahn (104) liegt,
- daß die beiden Kollektorbahnen (110, 111) mit je einem Anschlußkontakt verbunden sind,
- daß die den Kollektorbahnen (110, 111) zugeordneten Stromabnehmer-Schleifer (107, 108) auf der zusammen mit der Welle (2) umlaufenden Scheibe (3) angeordnet sind und mit je einem mit der Widerstandsbahn (104) in Kontakt stehenden Stromabnehmer-Schleifer (112, 113) verbunden sind,
- daß die Anschlußkontakte als Steckverbindungen (Steckbuchsen 114 bis 117) ausgebildet sind und
- daß die Steckverbindungen (Steckbuchsen 114 bis 117) in der feststehenden Scheibe (1) integriert sind.

3. Potentiometer nach Anspruch 1 oder 2, dadurch **gekennzeichnet**, daß die Steckverbindungen (Steckbuchsen 14 bis 17; 114 bis 117) mit Befestigungsklammern (18) versehen sind für die Befestigung der Steckverbindungen (Steckbuchsen 14 bis 17; 114 bis 117) in der feststehenden Scheibe (1).

4. Potentiometer nach Anspruch 3, dadurch **gekennzeichnet**, daß die Befestigungsklammern (18) als Kontaktstellen ausgebildet sind für die Verbindung der Widerstandsbahn (4) und der Kollektorbahnen (10, 11) mit den Steckverbindungen (Steckbuchsen 14 bis 17; 114 bis 117).

5. Potentiometer nach einem der Ansprüche 1, 2 oder 4, dadurch **gekennzeichnet**, daß die Widerstandsbahn (4; 104) durch wenigstens eine Steckverbindung (Steckbuchse 17; 116, 117) untertunnelt ist für eine Verbindung der Steckverbindung (Steckbuchse 17; 116, 117) mit wenigstens einer innen liegenden Kollektorbahn (11; 110, 111).

6. Potentiometer nach Anspruch 1 oder 2, dadurch **gekennzeichnet**, daß die Steckverbindungen (Steckbuchsen 14 bis 17; 114 bis 117) als Steckbuchsen (14 bis 17; 114 bis 117) ausgebildet sind für die Aufnahme eines Anschlußsteckers (24) ausgebildet sind, der in einer im Bereich der Steckbuchsen (14 bis 17; 114 bis 117) in dem Gehäuse (27) liegenden Anschlußöffnung (28) dichtend aufgenommen ist.

7. Potentiometer nach Anspruch 6, dadurch **gekennzeichnet**,
- daß die Steckbuchsen (14 bis 17; 114 bis 117) parallel zueinander in einer Reihe nebeneinander im wesentlichen senkrecht zu der Achse der Welle (2) in der feststehenden Scheibe (1) angeordnet sind mit an der Außenumfangsfläche der feststehenden Scheibe (1) liegenden Öffnungen und
- daß der Anschlußstecker (24) ein Flachstecker ist mit parallel zueinander in einer Reihe nebeneinander angeordneten Anschlußstiften (23).

## Claims

1. Combination of a potentiometer and a shaft (2) for measuring rotational angles of the shaft (2) relative to a stationary housing (27), with the following features:
- at least one circular resistance track (4) is arranged on a stationary disk (1);
- two circular collector tracks (10, 11) are arranged concentrically to one another on a disk (3) revolving together with the shaft (2);
- the resistance track (4) is connected to two connecting contacts at two resistance pick-off points (5, 6) mutually offset by 180°;
- each of the collector tracks (10, 11) is allocated a current-collecting wiper (7, 8) which is connected to a connecting contact,
characterised in that
- the external collector track (10) is arranged in a region located radially outside the resistance track (4) and the internal collector track (11) in a region located radially inside the resistance track (4);
- a respective current-collecting wiper (12 or 13) is connected to one of the collector tracks (10, 11) and makes resilient contact with the resistance track (4);
- the connecting contacts are designed as plug connections (plug sockets 14 to 17); and
- the plug connections (plug sockets 14 to 17) are integrated in the stationary disk (1).

2. Combination of a potentiometer and a shaft (2) for measuring rotational angles of the shaft (2) relative to a stationary housing (27), with the following features:
- at least one circular resistance track (104) is arranged on a stationary disk (1);
- a disk (3) revolves with the shaft (2);
- two circular collector tracks (110, 111) are arranged concentrically to one another;
- the resistance track (104) is connected to two connecting contacts at two resistance pick-off points (5, 6) mutually offset by 180°;
- each of the collector tracks (110, 111) is allocated a current-collecting wiper (107, 108),
characterised in that
- the two collector tracks (110, 111) on the stationary disk (1) are arranged concentrically to the resistance track (104) in a region located radially inside and/or outside the resistance track (104);
- the two collector tracks (110, 111) are connected to a respective connecting contact;
- the current-collecting wipers (107, 108) allocated to the collector tracks (110, 111) are arranged on the disk (3) revolving together with the shaft (2) and are connected to a respective current-collecting wiper (112, 113) making contact with the resistance track (104);
- the connecting contacts are designed as plug connections (plug sockets 114 to 117); and
- the plug connections (plug sockets 114 to 117) are integrated in the stationary disk (1).

3. Potentiometer according to claim 1 or 2, characterised in that the plug connections (plug sockets 14 to 17; 114 to 117) are provided with fastening clips (18) for fastening the plug connections (plug sockets 14 to 17; 114 to 117) in the stationary disk (1).

4. Potentiometer according to claim 3, characterised in that the fastening clips (18) are designed as contact points for the connection of the resistance track (4) and the collector tracks (10, 11) to the plug connections (plug sockets 14 to 17; 114 to 117).

5. Potentiometer according to one of claims 1, 2 or 4, characterised in that the resistance track (4; 104) is tunnelled by at least one plug connection (plug socket 17; 116, 117) for connection of the plug connection (plug socket 17; 116, 117) to at least one internally located collector track (11; 110, 111).

6. Potentiometer according to claim 1 or 2, characterised in that the plug connections (plug sockets 14 to 17; 114 to 117) are designed as plug sockets (14 to 17; 114 to 117) for receiving a connecting plug (24) which is received in a sealed manner in a connecting orifice (28) located in the housing (27) in the region of the plug sockets (14 to 17; 114 to 117).

7. Potentiometer according to claim 6, characterised in that
- the plug sockets (14 to 17; 114 to 117) are arranged parallel to one another in a row next to one another and substantially perpendicularly to the axis of the shaft (2) in the stationary disk (1) with orifices located on the external peripheral surface of the stationary disk (1);
- the connecting plug (24) is a flat-pin plug with connecting pins (23) arranged parallel to one another and next to one another in a row.

## Revendications

1. Combinaison d'un potentiomètre et d'un arbre (2) pour la mesure d'un angle de rotation de cet arbre (2) par rapport à un boîtier fixe (27) ayant les caractéristiques suivantes :
- sur un disque fixe (1) est agencée au moins une piste résistive (4) circulaire;
- sur un disque (3) rotatif lié à l'arbre (2) sont agencées deux pistes collectrices circulaires (10, 11) concentriques;
- la piste résistive (4) est couplée en deux zones de mesure de la résistance (5, 6) décalées entre elles de 180°, avec deux bornes de contact;
- à chaque piste collectrice (10, 11) correspond un frotteur-capteur de courant (7, 8), qui est couplé à une borne de contact,
**caractérisée** en ce que,
- la piste collectrice extérieure (10) est disposée dans un secteur radialement extérieur à la piste résistive (4) et la piste collectrice intérieure (11) est disposée dans un secteur radialement intérieur à la piste résistive (4);
- un des frotteurs-capteurs de courant (12 respectivement 13) est respectivement couplé à une des pistes collectrices (10, 11) et se trouve en contact souple avec la piste résistive (4);
- les bornes de contact sont constituées par des liaisons enfichables (douilles 14 à 17) et
- les liaisons enfichables (douilles 14 à 17) sont intégrées dans le disque fixe (1).

2. Combinaison d'un potentiomètre et d'un arbre (2) pour la mesure d'un angle de rotation de cet arbre (2) par rapport à un boîtier fixe (27), ayant les caractéristiques suivantes :
- sur un disque fixe (1) est agencée au moins une piste résistive (104) circulaire;
- un disque (3) est entraîné en même temps que l'arbre (2):
- deux pistes collectrices circulaires (110, 111) sont concentriques,
- la piste résistive (104) est reliée en deux zones de mesure de la résistance (5, 6) décalées de 180° à deux bornes de contact,
- à chaque piste collectrice (110, 111) correspond un frotteur-capteur de courant (107, 108),
**caractérisée** en ce que,
- les deux pistes collectrices (110, 111) sont disposées sur le disque fixe (1) concentriquement par rapport à la piste résistive (104), dans une zone qui est radialement à l'intérieur et/ou à l'extérieur de la piste résistive (104),
- les deux pistes collectrices (110, 111) sont reliées à une borne de contact,
- les frotteurs-capteurs de courant (107, 108) associés aux pistes collectrices (110, 111) sont disposés sur le disque (3) rotatif avec l'arbre (2) et sont couplés respectivement avec un des frotteurs-capteurs de courant (112, 113) couplés à la piste résistive (104),
- les bornes de contact sont constituées par des liaisons enfichables (douilles 114 à 117) et
- les liaisons enfichables (douilles 114 à 117) sont intégrées dans le disque fixe (1).

3. Potentiomètre selon la revendication 1 ou 2, **caractérisée** en ce que les liaisons enfichables (douilles 14 à 17; 114 à 117) sont pourvues de pièces de fixation (18) pour la fixation des liaisons enfichables (douilles 14 à 17; 114 à 117) dans le disque fixe (1).

4. Potentiomètre selon la revendication 3, **caractérisée** en ce que les pièces de fixation (18) constituent des zones de contact pour assurer la liaison entre la piste résistive (4) et les pistes collectrices (10, 11) avec les liaisons enfichables (douilles 14 à 17; 114 à 117).

5. Potentiomètre selon l'une des revendications 1, 2 ou 4, **caractérisé** en ce que la piste résistive (4, 104) est superposée à au moins une liaison enfichable (douille 17; 116, 117) qui assure une connexion entre cette liaison enfichable (douille 17; 116, 117) avec au moins une piste collectrice intérieure (11; 110, 111).

6. Potentiomètre selon la revendication 1 ou 2, c a r a c t é r i s é en ce que les liaisons enfichables (douilles 14 à 17; 114 à 117) sont constituées par des douilles (14 à 17; 114 à 117) pour recevoir une fiche de raccordement (24), qui est engagée de façon étanche dans une ouverture de raccordement (28) du boîtier (27) dans la zone des douilles (14 à 17; 114 à 117).

7. Potentiomètre selon la revendication 6, **caractérisé** en ce que,
- les douilles (14 à 17; 114 à 117) sont disposés parallèlement entre elles dans une rangée, sensiblement perpendiculairement à l'arbre (2) sur le disque fixe (1) avec les ouvertures situées au niveau de la surface périphérique du disque fixe (1) et
- la fiche de raccordement (24) est une prise plate comportant des tiges de contact (23) disposées parallèlement entre elles sur une rangée.
